# EUROPEAN PATENT APPLICATION

(11) **EP 4 559 994 A1**
(43) Date of publication of application: **28.05.2025**
(21) Application number: 24213839.4
(22) Date of filing: 19.11.2024
(51) Int. Cl.: C10B 53/07, C10G 1/10, C08J 11/10

(54) **PROCESS FOR PRODUCING A HTL BASED PRODUCT FROM FOOTWEAR CONTAINING FEEDSTOCK**

(30) Priority: 21.11.2023 DK PA202370584
(71) Applicant: Ecco Sko A/S, 6261 Bredebro (DK)
(72) Inventor: Lindhardt, Anders Thyboe, 6261 Bredebro (DK); Gøgsig, Thomas, 6261 Bredebro (DK)
(74) Representative: Patentgruppen A/S

(57) **Abstract**

A process for producing at least a HTL based product (HBP) comprising an oil product and/or recycled chemical(s) is disclosed. The process comprises the steps of providing a feedstock fraction (FF) comprising footwear products, in a particulation step processing at least a part of the feedstock fraction (FF) into at least one particulated feedstock fraction (PFF), subjecting at least one particulated feedstock fraction (PFF) to hydrothermal liquefaction (HTL) to obtain the HTL based product (HBP). Also, a system for producing a HTL based product (HBP) comprising an oil product and/or recycled chemical(s) is disclosed.

## Description

### FIELD OF INVENTION

The invention relates to a process for producing at least a HTL based product according to the claims.

### BACKGROUND

In recent years, increased focus has been put on sustainable production and handling of apparel products including footwear, for example by increased focus on recycling of products or their materials. However, footwear products may typically be composed of a relatively high number of different materials, which are effectively jointed to increase the product lifetime, thereby posing a significant obstacle for recycling of materials from footwear products. Consequently, a large fraction of discarded footwear products is not recycled, but instead sent e.g. to landfills.

When disposing footwear products to landfills, this may have undesirable environmental consequences e.g. with respect to pollution but also since the footwear material over time breaks down to release carbon dioxide. One alternative may be using the discarded footwear products as a fuel source, whereby some value may be gained from incineration. Still, this may have a limited benefit and would not enable any recycling of materials.

Other efforts have been made to produce footwear products designed for recycling, e.g. by producing mono-material footwear products. This, however, results in yet unsolved problems with respect to product lifetime and comfort.

It is an object of the invention to solve one or more of the above problems.

### SUMMARY

The invention relates to a process for producing at least a HTL based product comprising an oil product and/or recycled chemical(s), the process comprising the steps of
providing a feedstock fraction comprising footwear products,
in a particulation step processing at least a part of the feedstock fraction into at least one particulated feedstock fraction,
subjecting at least one particulated feedstock fraction to hydrothermal liquefaction to obtain the HTL based product.

One advantage of the invention may be that a useful HTL based product comprising an oil product and/or recycled chemical(s) may be obtained from the footwear containing feedstock fraction.

Surprisingly, footwear products may result in a relatively effective conversion to the HTL based product, using hydrothermal liquefaction. While footwear products on one hand typically are composed of many different materials and thus unsuitable for recycling, they have been found to be excellent as feedstock material for hydrothermal liquefaction, e.g. when co-feeding with a biomass feedstock or when processing the footwear products into different feedstock fractions. Also, footwear products as such are a suitable feedstock for the hydrothermal liquefaction, due to the particulation of the footwear product containing feedstock fraction, even though footwear products as such typically would be unsuitable for hydrothermal liquefaction, e.g. due to poor handleability/pumpability and prolonged residence time necessary for unparticulated footwear products.

A further advantage of the invention may be that while the footwear products may contain a high number of additives and so-called forever chemicals posing a challenge for recycling, e.g. PFAS compounds or metals such as Cu, Co, Cr, etc., these may either be broken down due to the severity of the process conditions utilized in hydrothermal liquefaction, or separated during the process in a solid phase or in the oil phase. Correct handling of these entities may be greatly simplified, e.g. after separation into specific phases and fractions.

It is noted that the hydrothermal liquefaction step results in at least one output fraction in the form of the HTL based product. In embodiments where the HTL based product comprises an oil product, this oil product may be obtained as a separate fraction or in a fraction containing further components, such as water, solid components, gaseous components, etc.

In the present context the term "particulated feedstock fractions" refers to feedstock fractions that have been particulated. Thus, the particulated feedstock fractions have been processed by suitable techniques, such as granulation, grinding, tearing, cutting, milling, crushing, shredding, etc.

In the present context the term "HTL based product" includes either an oil product, one or more recycled chemicals or both. In this context, the term HTL based refers to the product being based on hydrothermal liquefaction.

In the present context the term "oil product" refers to oil recovered from the claimed process. It is noted that the term crude oil or crude may also sometimes be used to refer to the oil product. Further, it is noted that, the term biocrude may often be used within hydrothermal liquefaction, however in the present case the term "oil product" is used. The term biocrude may be used herein interchangeable with oil product, although it is emphasized how the oil product as such may be composed of components based on biomass, synthetic materials, semisynthetic material or combinations thereof. Also, it is noted that the oil may in some embodiments be a viscous oil having a viscosity of at least 10 centipoise, such as at least 100 centipoise, such as at least 1,000 centipoise, such as at least 10,000 centipoise.

It is noted that, the footwear products may be composed of new footwear products, footwear products, defective footwear products, surplus footwear products, used footwear products, end-of-life footwear products, etc.

It is noted that in some embodiments, the particulation step and the hydrothermal liquefication step are non-overlapping, i.e. the particulation of the feedstock fraction is completed prior to the initiation of the hydrothermal liquefaction.

Similarly, it is noted that in other embodiments, the particulation step and the hydrothermal liquefication step are partly overlapping, e.g. by the initiation of the hydrothermal liquefication step being prior to the completion of the particulation step. In some embodiments, the feedstock fraction in its non-particulated state may undergo a pre-processing where the conditions may partly or fully overlap with the hydrothermal liquefaction step, and the particulation may be effected during and/or integrated with the hydrothermal liquefaction, i.e. so that the particulated feedstock fraction is then being subjected to hydrothermal liquefaction.

According to an advantageous embodiment of the invention, the particulation step comprises processing at least a part of the feedstock fraction into at least a first particulated feedstock fraction and a second particulated feedstock fraction, wherein at least one of the first feedstock fraction and the second feedstock fraction is subjected to hydrothermal liquefaction.

One advantage of the above embodiment may be that an effective conversion by hydrothermal liquefaction may be obtained. In particular, by subjecting at least one of the feedstock fractions to hydrothermal liquefaction and separately handling the other feedstock fraction, e.g. by separate hydrothermal liquefaction, by separate hydrothermal liquefaction with co-feeding, etc., or if not suitable therefor by other treatment, a much more effective handling of the feedstock fraction may be obtained.

According to an advantageous embodiment of the invention, the first feedstock fraction is subjected to a first hydrothermal liquefaction, and wherein the second feedstock fraction is subjected to a second hydrothermal liquefaction.

One advantage of the above embodiment may be that an effective conversion by hydrothermal liquefaction may be obtained. On one hand, the ability of hydrothermal liquefaction to process feedstocks comprising a large variety of chemical compounds is utilized, and on the other hand the feedstock fraction is processed into at least two feedstock fractions for separate hydrothermal liquefaction of the feedstock fractions. In some embodiments, this may even enable recovery of recycled chemicals such as monomeric components as well as oil product from the output fractions.

Thus, in the above embodiment, the first particulated feedstock fraction is subjected to a first hydrothermal liquefaction, and the second particulated feedstock fraction is subjected to a second hydrothermal liquefaction, where the first and the second hydrothermal liquefactions are separate. It is noted that the first and second hydrothermal liquefactions may be done using two different hydrothermal liquefaction systems, or by using the same hydrothermal liquefaction system operated sequentially. Thus, a first obtained output fraction comprising a first HTL based product is obtained from the first hydrothermal liquefaction, and a second obtained output fraction comprising a second HTL based product is obtained from the second hydrothermal liquefaction.

An advantage of the above embodiment may be that a more efficient hydrothermal liquefaction of the feedstock fractions may be obtained, since the process conditions may be adapted to the individual feedstock fractions. Thereby, the process may be more cost-effective, e.g. by lowering the average processing time (retention time), lowering the average temperature, by improving the quality of the HTL product, increasing the yield, etc.

In an embodiment of the invention, the method comprises processing at least a part of the feedstock fraction into a plurality of particulated feedstock fractions, such as at least two particulated feedstock fractions, and
subjecting the plurality of particulated feedstock fractions separately to hydrothermal liquefaction.

According to an advantageous embodiment of the invention, the at least two particulated feedstock fractions have a different composition.

According to an advantageous embodiment of the invention, the particulation step further comprises cutting the footwear into at least one sole based part and at least one upper part prior to processing.

Thus, in the above embodiment, the sole is cut from the footwear prior to the processing into particulate.

One advantage of the above embodiment may be that an effective conversion by hydrothermal liquefaction may be obtained. On one hand, the ability of hydrothermal liquefaction to process feedstocks comprising a large variety of chemical compounds is utilized, and on the other hand the footwear products are separated to enable separate processing by hydrothermal liquefaction. In some embodiments, this may even enable recovery of recycled chemicals such as monomeric components as well as oil product from the output fractions.

In an embodiment of the invention, the sole based part comprises sole in an amount of at least 70% by weight of sole based part, such as at least 80% by weight of the sole based part, such as at least 90% by weight of the sole based part, such as at least 95% by weight of the sole based part.

In an embodiment of the invention, the sole based part comprises sole in an amount of 70 to 100% by weight of sole based part, such as 80 to 99.9% by weight of the sole based part, such as 90 to 99% by weight of the sole based part, such as 95 to 98% by weight of the sole based part.

In an embodiment of the invention, the sole based part consists essentially of sole.

In an embodiment of the invention, the upper based part comprises upper in an amount of at least 70% by weight of upper based part, such as at least 80% by weight of the upper based part, such as at least 90% by weight of the upper based part, such as at least 95% by weight of the upper based part.

In an embodiment of the invention, the upper based part comprises upper in an amount of 70 to 100% by weight of upper based part, such as 80 to 99.9% by weight of the upper based part, such as 90 to 99% by weight of the upper based part, such as 95 to 98% by weight of the upper based part.

In an embodiment of the invention, the upper based part consists essentially of upper.

According to an advantageous embodiment of the invention, in the particulation step, the sole based part is processed into at least a first particulated feedstock fraction being a sole based particulate fraction.

According to an advantageous embodiment of the invention, in the particulation step, the upper based part is processed into a second particulated feedstock fraction being an upper based particulate fraction.

An advantage of the above embodiment may be that the further processing of the sole based parts and the upper based parts may be optimized by separate handling as the first and second particulated feedstock fractions. For example, these at least two feedstock fractions may be subjected to separate hydrothermal liquefaction processing each optimized to the particular feedstock fraction. In another example, one of the first and second particulated feedstock fractions is subjected to hydrothermal liquefaction, in particular if the other fraction is unsuitable for hydrothermal liquefaction and/or more suitable for other types processing.

In some embodiments, only the sole based part is particulated.

In some embodiments, the first particulated feedstock fraction has a smaller average particle size than the second particulated feedstock fraction.

In some cases, the upper parts may be more easily processed by hydrothermal liquefaction, and therefore may not need to be particulated or may only need a partial particulation compared to the sole parts, i.e. to a larger average particle size.

According to an advantageous embodiment of the invention, at least one of the first feedstock fraction and the second feedstock fraction is subjected to hydrothermal liquefaction.

According to an advantageous embodiment of the invention, the first feedstock fraction is subjected to a first hydrothermal liquefaction, and wherein the second feedstock fraction is subjected to a second hydrothermal liquefaction.

Thus, the processed feedstock fraction comprises or consists of at least one sole based particulate fraction based on sole based parts and at least one upper based fraction based on upper parts.

In an embodiment of the invention, the sole based part is processed, in the particulation step, into at least a first particulated feedstock fraction being a sole based particulate fraction,
wherein, in the particulation step, the upper part is processed into a second particulated feedstock fraction being an upper based particulate fraction,
wherein the first feedstock fraction is subjected to a first hydrothermal liquefaction, and wherein the second feedstock fraction is subjected to a second hydrothermal liquefaction.

It is noted that the sole based fraction and/or the upper based fraction may be further processed into separate fractions. As an illustrative example, if the sole is composed of polyurethane, cork, and rubber, it may be beneficial to process the sole based fraction into three separate fractions, a polyurethane based fraction, a cork based fraction, and a rubber based fraction. Then, one or more of the polyurethane based fraction, the cork based fraction, and the rubber based fraction may be subjected to hydrothermal liquefaction, optionally after being mixed with a cofed feedstock fraction as described herein.

In an embodiment of the invention, the sole based particulate fraction comprises particulated sole based parts in an amount of at least 90% by weight of sole based particulate fraction, such as at least 95% by weight of the sole based particulate fraction, such as at least 99% by weight of the sole based particulate fraction.

In an embodiment of the invention, the sole based particulate fraction comprises particulated sole based parts in an amount of 90 to 100% by weight of sole based particulate fraction, such as 95 to 99.9% by weight of the sole based particulate fraction, such as 99 to 99.5% by weight of the sole based particulate fraction.

In an embodiment of the invention, the sole based particulate fraction consists essentially of particulated sole based parts.

In an embodiment of the invention, the upper based particulate fraction comprises upper sole based parts in an amount of at least 90% by weight of upper based particulate fraction, such as at least 95% by weight of the upper based particulate fraction, such as at least 99% by weight of the upper based particulate fraction.

In an embodiment of the invention, the upper based particulate fraction comprises upper sole based parts in an amount of 90 to 100% by weight of upper based particulate fraction, such as 95 to 99.9% by weight of the upper based particulate fraction, such as 99 to 99.5% by weight of the upper based particulate fraction.

In an embodiment of the invention, the upper based particulate fraction consists essentially of particulated upper based parts.

According to an advantageous embodiment of the invention, the sole based particulate fraction is separated into at least two different separated sole based particulate fraction.

According to an advantageous embodiment of the invention, the upper based particulate fraction is separated into at least two different separated upper based particulate fraction.

In an embodiment of the invention, the sole based part is processed into at least a first particulated feedstock fraction being a sole based particulate fraction and the upper based part is not particulated.

According to an advantageous embodiment of the invention, the method further comprising a particulate separation step comprising separating at least one particulated feedstock fraction into at least two different separated particulated feedstock fractions in the form of a first particulated feedstock fraction and a second particulated feedstock fraction, such as at least three different separated particulated feedstock fractions, such as at least four different separated particulated feedstock fractions.

According to an advantageous embodiment of the invention, the first particulated feedstock fraction and the second particulated feedstock fraction are different.

According to an advantageous embodiment of the invention, the first particulated feedstock fraction and the second particulated feedstock fraction have a composition similarity of no more than 70% by weight, such as no more than 50% by weight, such as no more than 30% by weight, such as no more than 20% by weight.

In an embodiment of the invention, the first particulated feedstock fraction and the second particulated feedstock fraction have a composition similarity of 0 to 70% by weight, such as 1 to 50% by weight, such as 2 to 30% by weight, such as 5 to 20% by weight.

Compositions similarity may e.g. be expressed as the compositions of the first particulated feedstock fraction and the second particulated feedstock fraction having a Jaccard index of no more than 0.7 when calculated by weight, such as no more than 0.5, when calculated by weight, such as no more than 0.3, when calculated by weight, such as no more than 0.2.

According to an advantageous embodiment of the invention, the second particulated feedstock fraction has a content of natural material that is at least 20% by weight higher than for the first particulated feedstock fraction.

In an embodiment of the invention, the second particulated feedstock fraction has a content of natural material that is 20 to 80% by weight higher than for the first particulated feedstock fraction.

In one illustrative example embodiment, the first particulated feedstock fraction is composed solely of synthetic material and the second particulated feedstock fraction is composed solely of natural material.

In another illustrative example embodiment, the first particulated feedstock fraction is composed solely of natural material and the second particulated feedstock fraction is composed solely of synthetic material.

In another example embodiment, the first particulated feedstock fraction is composed solely of synthetic material and the second particulated feedstock fraction is composed of solely synthetic material.

In another illustrative example embodiment, the first particulated feedstock fraction is composed solely of natural material and the second particulated feedstock fraction is composed solely of natural material

According to an advantageous embodiment of the invention, the first particulated feedstock fraction has a content of polymeric material that is at least 20% by weight higher than for the second particulated feedstock fraction.

In an embodiment of the invention, the first particulated feedstock fraction has a content of polymeric material that is 20 to 80% by weight higher than for the second particulated feedstock fraction.

According to an advantageous embodiment of the invention, the first particulated feedstock fraction has a content of synthetic polymeric material that is at least 20% by weight higher than for the second particulated feedstock fraction.

In an embodiment of the invention, the first particulated feedstock fraction has a content of synthetic polymeric material that is 20 to 80% by weight higher than for the second particulated feedstock fraction.

According to an advantageous embodiment of the invention, the first particulated feedstock fraction has a content of polyurethane that is at least 20% by weight higher than for the second particulated feedstock fraction.

In an embodiment of the invention, the first particulated feedstock fraction has a content of polyurethane that is 20 to 80% by weight higher than for the second particulated feedstock fraction.

According to an advantageous embodiment of the invention, the first particulated feedstock fraction has a content of polyurethane of at least 25% by weight, such as at least 50% by weight.

In an embodiment of the invention, the first particulated feedstock fraction has a content of polyurethane of 25 to 90% by weight, such as 50 to 80% by weight.

According to an embodiment of the invention, the first particulated feedstock fraction has a content of rubber of at least 25% by weight, such as at least 50% by weight.

In an embodiment of the invention, the first particulated feedstock fraction has a content of rubber of 25 to 90% by weight, such as 50 to 80% by weight.

According to an embodiment of the invention, the first particulated feedstock fraction has a content of ethyl-vinyl acetate (EVA) of at least 25% by weight, such as at least 50% by weight.

In an embodiment of the invention, the first particulated feedstock fraction has a content of ethyl-vinyl acetate (EVA) of 25 to 90% by weight, such as 50 to 80% by weight.

According to an embodiment of the invention, the first particulated feedstock fraction has a content of cork of at least 25% by weight, such as at least 50% by weight.

In an embodiment of the invention, the first particulated feedstock fraction has a content of cork of 25 to 90% by weight, such as 50 to 80% by weight.

According to an embodiment of the invention, the first particulated feedstock fraction has a content of wood of at least 25% by weight, such as at least 50% by weight.

In an embodiment of the invention, the first particulated feedstock fraction has a content of wood of 25 to 90% by weight, such as 50 to 80% by weight.

According to an embodiment of the invention, the first particulated feedstock fraction has a content of thermoplastic polyurethane of at least 25% by weight, such as at least 50% by weight.

In an embodiment of the invention, the first particulated feedstock fraction has a content of thermoplastic polyurethane of 25 to 90% by weight, such as 50 to 80% by weight.

According to an embodiment of the invention, the first particulated feedstock fraction has a content of thermoplastic elastomers of at least 25% by weight, such as at least 50% by weight.

In an embodiment of the invention, the first particulated feedstock fraction has a content of thermoplastic elastomers of 25 to 90% by weight, such as 50 to 80% by weight.

According to an advantageous embodiment of the invention, the second particulated feedstock fraction has a content of polyurethane of no more than 10% by weight, such as no more than 5% by weight.

In an embodiment of the invention, the second particulated feedstock fraction has a content of polyurethane of 0 to 10% by weight, such as 1 to 5% by weight.

According to an advantageous embodiment of the invention, the feedstock fraction further comprises a cofed feedstock.

One advantage of the above embodiment may be that an obtained oil product may have improved properties, e.g. with respect to viscosity, stability, higher heating value (HHV), etc.

Another advantage of the above embodiment may be that a cofed feedstock may result in enhanced or simplified recovery of both the oil product fraction and/or recycled chemical(s).

Another advantage of the above embodiment may be that the feedstock fraction comprising biomass feedstock may have improved properties with respect to handling, e.g. pumpability. Furthermore, the utilization of a feedstock fraction comprising a cofed feedstock may facilitate particulation into the particulated feedstock fraction.

According to an advantageous embodiment of the invention, the method further comprises a feedstock mixing step for mixing footwear or a fraction derived therefrom and a cofed feedstock to obtain said feedstock fraction.

According to an advantageous embodiment of the invention, the cofed feedstock comprises a low-value or negative value feedstock.

According to an advantageous embodiment of the invention, the cofed feedstock comprises a feedstock selected from the group of textile and textile based waste, industrial waste fractions, manure, and combinations thereof.

According to an advantageous embodiment of the invention, the cofed feedstock comprises a biomass feedstock.

One advantage of the above embodiment may be that an obtained oil product may have improved properties, e.g. with respect to viscosity, higher heating value, stability, lower sulfur content, etc.

One advantage of the above embodiment may be that an obtained recycled chemical(s) may have improved improved yields and/or a simpler isolation.

Another advantage of the above embodiment may be that the feedstock fraction comprising biomass feedstock may have improved properties with respect to handling, e.g. pumpability.

In the present context, the term biomass feedstock is understood as a feedstock consisting of biomass and which does not comprise footwear or components therefrom.

Thus, in the above embodiment, the feedstock fraction comprises footwear products and biomass.

In an embodiment of the invention, the feedstock fraction comprises footwear products and industrial waste streams.

In an embodiment of the invention, the feedstock fraction comprises footwear products and a combination of biomass and industrial waste streams.

In an embodiment of the invention, the cofed feedstock is a biomass feedstock.

According to an advantageous embodiment of the invention, the feedstock fraction comprises biomass feedstock in an amount of at least 2% by weight of the feedstock fraction, such as at least 5% by weight of the feedstock fraction, such as at least 10% by weight of the feedstock fraction, such as at least 20% by weight of the feedstock fraction, such as at least 30% by weight of the feedstock fraction, such as at least 40% by weight of the feedstock fraction.

In an embodiment of the invention, the feedstock fraction comprises biomass feedstock in an amount of 2 to 50% by weight of the feedstock fraction, such as 5 to 50% by weight of the feedstock fraction, such as 10 to 50% by weight of the feedstock fraction, such as 20 to 50% by weight of the feedstock fraction, such as 30 to 48% by weight of the feedstock fraction, such as 40 to 45% by weight of the feedstock fraction.

In an embodiment of the invention, the feedstock fraction comprises biomass feedstock in an amount of 2 to 40% by weight of the feedstock fraction, such as 5 to 35% by weight of the feedstock fraction, such as 10 to 30% by weight of the feedstock fraction, such as 15 to 25% by weight of the feedstock fraction, such as 10 to 20% by weight of the feedstock fraction.

According to an advantageous embodiment of the invention, the biomass feedstock comprises a cellulose based feedstock.

In an embodiment of the invention, the biomass feedstock is a cellulose based feedstock.

According to an advantageous embodiment of the invention, the biomass feedstock comprises a lignocellulosic biomass.

In an embodiment of the invention, the biomass feedstock is a lignocellulosic biomass.

According to an embodiment of the invention, the biomass feedstock comprises a starch based feedstock.

According to an advantageous embodiment of the invention, the biomass feedstock is selected from the group consisting of wood based biomass, wood pulp, straw, forestry residue, cork, bark, lignin, microalgae, macroalgae, seaweed, kelp, corn cobs, corn, waste fat, used cooking oils, corn stover, food waste, agricultural waste, rice husks, sugarcane bagasse, molasses, cotton, starch, cellulose, wheat, barley, mash, cotton stalks, grass, manure, yard waste, nut shells, coffee grounds, peels from fruit and vegetables, and any combination thereof.

According to an advantageous embodiment of the invention, the industrial waste feedstock is selected from the group consisting of productions wastes from the leather and textile industries, sewage sludge, end-of-life products, matrasses, wood containing construction demolition materials/debris, municipal solid waste, residues from production processes, slaughterhouse waste, cheese whey, end-of-life furniture, paper, cardboard, end-of-life textile, surplus textile products from production of retail, waste food products from retail, furniture upholstery including vehicle seats, food processing waste, oil and lubricant waste, pharmaceutical waste, etc. and any combination thereof.

Wood based biomass may e.g. comprise wood chips, sawdust, logging residues, bark, willow, poplar, etc.

Grass may include both conventional grass, switchgrass, and elephant grass, which may refer to miscanthus, particularly giant miscanthus, and/or Cenchrus purpureus.

According to an advantageous embodiment of the invention, the footwear product comprises at least a sole, such as at least a sole and an upper.

It is noted that the upper may in some embodiments include only one or more straps for holding the sole in place, e.g. in the case of sandals, flip-flops, some high heels, whereas the upper in other cases may be more complex and may enclose the foot or a part thereof, e.g. in the case of athletic shoes, boots, dress shoes, slip-on, loafers, work shoes, etc.

According to an advantageous embodiment of the invention, the feedstock fraction comprises footwear products in an amount of at least 50% by weight of the feedstock fraction, such as at least 60% by weight of the feedstock fraction, such as at least 70% by weight of the feedstock fraction, such as at least 80% by weight of the feedstock fraction, such as at least 90% by weight of the feedstock fraction, such as at least 95% by weight of the feedstock fraction, or wherein the feedstock fraction consists of footwear products.

In an embodiment of the invention, the feedstock fraction comprises footwear products in an amount of 50 to 100% by weight of the feedstock fraction, such as 60 to 99.9% by weight of the feedstock fraction, such as 70 to 99.5% by weight of the feedstock fraction, such as 80 to 99% by weight of the feedstock fraction, such as 90 to 98% by weight of the feedstock fraction, such as 95 to 97% by weight of the feedstock fraction.

In an embodiment of the invention, the feedstock fraction comprises footwear products in an amount of 50 to 100% by weight of the feedstock fraction, such as 60 to 95% by weight of the feedstock fraction, such as 70 to 90% by weight of the feedstock fraction, such as 80 to 90% by weight of the feedstock fraction.

According to an advantageous embodiment of the invention, the particulated feedstock fraction comprises a combination of two or more materials.

According to an advantageous embodiment of the invention, the first particulated feedstock fraction comprises a combination of two or more materials.

According to an advantageous embodiment of the invention, the second particulated feedstock fraction comprises a combination of two or more materials.

According to an advantageous embodiment of the invention, the footwear product comprises two or more materials, such as three or more materials, such as four or more materials, such as five of more materials.

According to an advantageous embodiment of the invention, the footwear products comprise at least one material selected from the group consisting of polyether, polyethylene, polypropylene, polyesters (e.g. polyethylene terephthalate), polyamides (e.g. nylon), polycarbonate, polyurethane, thermoplastic polyurethane, ethyl-vinyl acetate (EVA), polylactic acid, synthetic rubber, natural rubber, thermoplastic elastomers, acrylonitrile butadiene styrene polymer (ABS), polystyrene, polyvinyl chloride (PVC), polystyrene, composite materials, cotton, wool, cork, wood, wood fibers, bamboo, coconut, leather, nubuck, suede, synthetic leathers, leather alternatives, collagen, animal hair, textile, silk, metals and alloys, adhesives and hotmelt glues, contact glues, polyurethane glues, epoxy glues, EVA glues, and any combination thereof, such as at least two materials selected from said group, such as at least three materials selected from said group, such as at least four materials selected from said group, such as at least five materials selected from said group, such as at least six materials selected from said group.

In an embodiment of the invention, the composite material is selected from thermoplastic and/or thermoset polymers mixed with one or more of glass fibers, textile fibers, and organic fibers.

In an embodiment of the invention, the leather alternatives is selected from apple leathers, pineapple leathers, mycelium leathers, and any combination thereof.

In an embodiment of the invention, metals and alloys used in one or more of eyelids, zippers, buttons, aglets, and shanks.

According to an advantageous embodiment of the invention, the footwear products comprise at least one material selected from the group consisting of leather, nubuck, suede, textile, natural rubber, synthetic rubber, thermoplastic elastomers, EVA, polyurethane such as thermoplastic polyurethane, and any combination thereof.

Further materials used for shoes may include natural materials such as e.g. cork, bamboo, and wood, or synthetic materials such as carbon fiber, polyvinyl chloride (PVC), acrylonitrile butadiene styrene (ABS), etc. It is noted that PVC may typically be regarded as an undesirable material, and the method comprises in some embodiments steps for removing PVC based items from the feedstock fraction.

In the present context, the term "polymeric material" refers to natural and synthetic polymers. Synthetic polymers may e.g. include polyurethane (including thermoplastic polyurethane), ethylene-vinyl acetate, thermoplastic elastomers, polyester, nylon, neoprene, etc. It is noted that these terms may be somewhat overlapping. Some synthetic materials, in particular ethylene-vinyl acetate and polyurethane may be used as foams. Natural polymers include in particular natural rubber (latex). It may also include one or more from the list of cotton, wool, leather, silk, etc., or their polymeric components.

In the present context, the term "textile" is understood as covering various fiber-based materials and fabrics, including woven and non-woven textile, knitted textile etc. Also, the fiber-based materials may be natural, synthetic or semi-synthetic in origin.

In an embodiment of the invention, the feedstock fraction has a moisture content of at least 2% by weight of the feedstock fraction, such as at least 5% by weight of the feedstock fraction, such as at least 10% by weight of the feedstock fraction.

In an embodiment of the invention, the feedstock fraction has a moisture content of 2 to 30% by weight of the feedstock fraction, such as 5 to 20% by weight of the feedstock fraction, such as 10 to 15% by weight of the feedstock fraction.

According to an advantageous embodiment of the invention, the feedstock fraction comprises inorganic components, such as sand or dirt.

By using waste footwear or end of life footwear as the feedstock or a component thereof, certain impurities are typically unavoidable due to real life use of the footwear. In particular, sand and dirt may be attached to footwear, especially the sole part, but in certain cases also other parts of the footwear, e.g. for footwear waste from landfills.

However, hydrothermal liquefaction is a well-suited processing method for such footwear containing feedstocks, since it may provide several possibilities for operating in spite of such impurities, e.g. by removing impurities or a part thereof prior to hydrothermal liquefaction, or by removing impurities or a part thereof after hydrothermal liquefaction.

In an embodiment of the invention, the feedstock fraction comprises inorganic components, such as sand or dirt, in an amount of at least 0.5% by weight of the feedstock fraction, such as at least 1% by weight of the feedstock fraction.

In an embodiment of the invention, the feedstock fraction comprises inorganic components, such as sand or dirt, in an amount of 0.5 to 10% by weight of the feedstock fraction, such as 1 to 5% by weight of the feedstock fraction.

According to an advantageous embodiment of the invention, the particulated feedstock fraction has a weight average particle size of no more than 10 millimeter, such as no more than 5 millimeter, such as no more than 2 millimeter, such as no more than 1 millimeter.

In an embodiment of the invention, the particulated feedstock fraction has a weight average particle size of 0.1 to 10 millimeter, such as 0.2 to 5 millimeter, such as 0.3 to 2 millimeter, such as 0.5 to 1 millimeter.

According to an embodiment of the invention, the first particulated feedstock fraction has a weight average particle size of no more than 10 millimeter, such as no more than 5 millimeter, such as no more than 2 millimeter, such as no more than 1 millimeter.

In an embodiment of the invention, the first particulated feedstock fraction has a weight average particle size of 0.1 to 10 millimeter, such as 0.2 to 5 millimeter, such as 0.3 to 2 millimeter, such as 0.5 to 1 millimeter.

According to an advantageous embodiment of the invention, the particulated feedstock fraction has a weight average shortest dimension of no more than 10 millimeter, such as no more than 5 millimeter, such as no more than 2 millimeter.

In an embodiment of the invention, the particulated feedstock fraction has a weight average shortest dimension of 0.1 to 10 millimeter, such as 0.2 to 5 millimeter, such as 0.5 to 2 millimeter.

According to an embodiment of the invention, the first particulated feedstock fraction has a weight average shortest dimension of no more than 10 millimeter, such as no more than 5 millimeter, such as no more than 2 millimeter.

In an embodiment of the invention, the first particulated feedstock fraction has a weight average shortest dimension of 0.1 to 10 millimeter, such as 0.2 to 5 millimeter, such as 0.5 to 2 millimeter.

According to an advantageous embodiment of the invention, the HTL based product comprises an oil product.

According to an advantageous embodiment of the invention, the HTL based product comprises at least one recycled chemical.

In an embodiment of the invention, an oil product and at least one recycled chemical is obtained from the method.

Thus, in the above embodiment is directed to a method of producing an oil product and at least one recycled chemical, such as at least one monomer.

According to an embodiment of the invention, the HTL based product comprises an oil product and at least one recycled chemical.

In an embodiment of the invention, the oil product and the at least one recycled chemical are mixed in same phase.

In an embodiment of the invention, the oil product and the at least one recycled chemical are present in different phases.

According to an advantageous embodiment of the invention, at least one recycled chemical comprises at least one monomer and/or monomer precursor.

In the present context, a monomer precursor is a precursor to a monomer. In some cases, such monomer precursors are referred to as chemical intermediates.

According to an embodiment of the invention, at least one recycled chemical comprises at least one monomer.

According to an embodiment of the invention, at least one recycled chemical comprises at least one monomer precursor.

According to an advantageous embodiment of the invention, the at least one monomer and/or monomer precursor comprises one or more polyurethane monomers and/or polyurethane monomer precursors.

In an embodiment of the invention, the monomers and/or monomer precursors may be selected form the group consisting of polyether polyols, polyester polyol precursors, alcohols and carboxylic acids (e.g., adipic acid), 4,4'-methylenedianiline, 2,4'-methylenedianiline, 2,2-methylenedianiline, 2,4-toluene diamine, 2,6-toluene diamine, polymeric mixtures of 4,4'-methylenedianiline, 2,4'-methylenedianiline, and 2,2-methylenedianiline, etc.

According to an advantageous embodiment of the invention, the at least one monomer or intermediates is selected from the group consisting of monomers or intermediates from polyamides, monomers or intermediates from polyesters, monomers or intermediates from polyurethanes, monomers or intermediates from ethylene-vinyl acetate, monomers or intermediates from rubbers, monomers or intermediates from thermoplastic polyurethane, monomers or intermediates from elastane, monomers or intermediates from carbonates, monomers or intermediates from thermoplastic polyurethane, monomers or intermediates from thermoplastic elastomers, monomers or intermediates from epoxides, and any combination thereof.

According to an advantageous embodiment of the invention, the method further comprises separating at least one oil product fraction from an output fraction of the hydrothermal liquefaction.

According to an advantageous embodiment of the invention, the method further comprises separating at least one recycled chemical, such as at least one monomer, from an output fraction of the hydrothermal liquefaction.

According to an advantageous embodiment of the invention, the method further comprises separating at least one recycled chemical, such as a valuable chemical entity, such as a chemical selected from the group consisting of copper salts, cobalt salts, chromium salts, phosphorous components, from an output fraction of the hydrothermal liquefaction.

According to an advantageous embodiment of the invention, the method further comprises a step of adding a water fraction to the feedstock fraction prior to the hydrothermal liquefaction.

According to an advantageous embodiment of the invention, the step of adding water is subsequent to the particulation step.

According to an advantageous embodiment of the invention, the step of adding water is prior to the particulation step.

According to an advantageous embodiment of the invention, the method further comprises a removal step of inorganic components, such as sand, of the feedstock fraction prior to the step of hydrothermal liquefaction.

In an embodiment of the invention, the step of removal step of inorganic components is prior to the particulation step.

In an embodiment of the invention, the step of removal step of inorganic components is after the particulation step.

According to an advantageous embodiment of the invention, the method further comprises a step of removing at least a part of contaminating and/or unprocessable components from the feedstock fraction.

According to an embodiment of the invention, the contaminating and/or unprocessable components comprises or are selected from the group consisting of metallic items (e.g. zippers, buttons, and rivets), polyvinyl chloride, and polyolefins (e.g. polyethylene, polypropylene, acrylonitrile butadiene styrene, polystyrene, etc.).

Removing at least a part of e.g. unprocessable components may be advantageous since these may damage hydrothermal liquefaction equipment, especially metallic components and especially in continuously operated hydrothermal liquefaction. Also, polyolefin-based components may lead to clogging due to melting rather than being broken down in the hydrothermal liquefaction equipment. Typically, the larger amounts of unprocessable components present in the feedstock fraction, the more advantageous the removal may be. Thus, smaller amounts of unprocessable components in the feedstock fraction may in some embodiments be acceptable.

According to an embodiment of the invention, the contaminating and/or unprocessable components are selected from metallic items and/or polyvinyl chloride.

The step of removing contaminating or unprocessable components may be before or after the particulation step.

In an embodiment of the invention, the method further comprises a step of removing metallic items from the feedstock fraction.

In an embodiment of the invention, the method further comprises a step of removing polyvinyl chloride items from the feedstock fraction.

According to an advantageous embodiment of the invention, the step of hydrothermal liquefaction comprises subjecting the particulated feedstock fraction to a temperature of at least 170 degrees Celsius, such as at least 200 degrees Celsius, such as at least 250 degrees Celsius, such as at least 300 degrees Celsius.

In an embodiment of the invention, the step of hydrothermal liquefaction comprises subjecting the particulated feedstock fraction to a temperature of 170 to 600 degrees Celsius, such as 170 to 550 degrees Celsius, such as 200 to 500 degrees Celsius, such as 250 to 450 degrees Celsius, such as 300 to 450 degrees Celsius.

According to an advantageous embodiment of the invention, the step of hydrothermal liquefaction comprises subjecting the particulated feedstock fraction to a pressure of at least 50 bar, such as at least 75 bar, such as at least 100 bar, such as at least 125 bar.

In an embodiment of the invention, the step of hydrothermal liquefaction comprises subjecting the particulated feedstock fraction to a pressure of least 50 to 400 bar, such as 75 to 350 bar, such as 100 to 300 bar, such as 125 to 250 bar, such as 125 to 200 bar.

According to an advantageous embodiment of the invention, the step of hydrothermal liquefaction has a processing time of at least 5 minutes, such as at least 10 minutes, such as at least 20 minutes, such as at least 30 minutes.

In an embodiment of the invention, the step of hydrothermal liquefaction has a processing time of 5 minutes to 10 hours, such as 10 minutes to 10 hours, such as 20 minutes to 5 hours, such as 30 minutes to 2 hours.

According to an advantageous embodiment of the invention, the method further comprises adding an additive, a reagent, a catalyst, or any combination thereof.

In an embodiment of the invention, the additive comprises or consists of inert additives and/or substantially inert additives. In an embodiment of the invention, the inert additives and/or substantially inert additives are selected from the group consisting of carriers, thickeners, agents facilitating pumpability, agents facilitating a stable suspension. The inert additives and/or substantially inert additives may be inert in the sense that they do not as such lead to a higher yield of HTL based product, but facilitates logistics, such as pumpability. According to an embodiment of the invention, the inert additives and/or substantially inert additives are selected from a group consisting of a salt, a silicate salt, bentonite, aluminum sulfate, magnesium sulfate, and any combination thereof. In some embodiments, the inert additives and/or substantially inert additives may comprise or consist of other substances.

According to an embodiment of the invention, the method further comprises adding a catalyst to the particulated feedstock fraction.

Adding a catalyst may advantageously facilitate increase of desired output components, such as oil product and/or recycled chemical(s) such as monomeric components.

The addition of catalyst may also serve to reduce the process temperature and/or process time needed to provide the desired output components. The addition of a catalyst may also serve to eliminate the formation of undesired process-impurities.

It is noted that in the present context, the term catalyst refers to additives having catalytic activity with respect to chemical reactions of the hydrothermal liquefaction step. It is noted that such catalyst may not necessarily be recoverable, e.g. due to inactivation by biproducts of certain other chemical processes. For example, base may be added as a catalyst for hydrolysis, but at the same time certain processes of the hydrothermal liquefaction may lead to formation of acids, which may hinder recovery of the bases. Similarly, recovery of catalysts may in some cases not be economically cost-effective. It is noted that in some cases, catalysts such as bases, may be referred to a catalytic additives, catalytic reagents, reaction-enhancing additives, or reaction-enhancing reagents.

In an embodiment of the invention, the catalyst is added to the particulated feedstock fraction prior to the step of hydrothermal liquefaction.

According to an advantageous embodiment of the invention, the catalyst, the reagent, the additive or any combination therefore comprises a base.

According to an embodiment of the invention, the catalyst comprises a base.

According to an embodiment of the invention, the catalyst comprises an acid. According to an embodiment of the invention, the catalyst comprises an acid selected from the group consisting of carboxylic acids such as adipic acid, acetic acid, benzoic acid, and citric acid, inorganic acids such as nitric acid, hydrochloric acid, sulfuric acid, and any combination thereof. In some embodiments, other acids may be usable as catalyst.

In an embodiment of the invention, the base is selected from sodium hydroxide, potassium hydroxide, calcium hydroxide, calcium oxide, ammonium hydroxide, and any combination thereof.

In an embodiment of the invention, the catalyst comprises or consists of iron chloride, aluminum salts, zeolite catalysts, a base, or any combination thereof.

In an embodiment of the invention, the catalyst comprises or consists of catalysts selected from the group consisting of transition metal catalysts, supported metal catalysts, noble metal catalysts, bifunctional catalysts, zeolites and heterogenous catalysts, biochar and biomass-derived catalysts, and any combination thereof.

According to an embodiment of the invention, the catalyst is provided as part of the aqueous fraction.

According to an embodiment of the invention, the additive, the reagent, the catalyst, or any combination thereof is provided as part of the aqueous fraction.

According to an advantageous embodiment of the invention, at least one or the temperature, the pressure and the processing time of the hydrothermal liquefaction is set at least partly based on the composition of the feedstock fraction.

The invention further relates to a system for producing a HTL based product comprising an oil product and/or recycled chemical(s), the system comprising
an inlet for receiving a feedstock fraction comprising footwear products,
a particulation arrangement connected to said inlet for receiving the feedstock fraction, the particulation arrangement being configured to particulate at least a part of the feedstock fraction into at least one particulated feedstock fraction, and
a hydrothermal liquefaction arrangement connected to the particulation arrangement for receiving the at least one particulated feedstock fraction, the hydrothermal liquefaction arrangement being configured to process the particulated feedstock fraction by hydrothermal liquefaction to obtain said HTL based product.

According to an advantageous embodiment of the invention, the system is configured to operate in accordance with the method according to the invention or any of its embodiments.

The invention further relates to aspects and embodiments according to the following clauses.
1. A process for producing at least a HTL based product (HBP) comprising an oil product and/or recycled chemical(s), the process comprising the steps of providing a feedstock fraction (FF) comprising footwear products,
   in a particulation step processing at least a part of the feedstock fraction (FF) into at least one particulated feedstock fraction (PFF),
   subjecting at least one particulated feedstock fraction (PFF) to hydrothermal liquefaction (HTL) to obtain the HTL based product (HBP).
2. The process according to clause 1, wherein the particulation step comprises processing at least a part of the feedstock fraction into at least a first particulated feedstock fraction and a second particulated feedstock fraction, wherein at least one of the first feedstock fraction and the second feedstock fraction is subjected to hydrothermal liquefaction.
3. The process according to clause 2, wherein the first feedstock fraction is subjected to a first hydrothermal liquefaction, and wherein the second feedstock fraction is subjected to a second hydrothermal liquefaction.
4. The process according to clause 2 or 3, wherein the at least two particulated feedstock fractions have a different composition.
5. The process according to any of clauses 1-4, wherein the particulation step further comprises cutting the footwear into at least one sole based part and at least one upper part prior to processing.
6. The process according to clause 5, wherein, in the particulation step, the sole based part is processed into at least a first particulated feedstock fraction being a sole based particulate fraction and the upper based part is processed into a second particulated feedstock fraction being an upper based particulate fraction.
7. The process according to clause 6, wherein at least one of the first feedstock fraction and the second feedstock fraction is subjected to hydrothermal liquefaction.
8. The process according to clause 6 or 7, wherein the first feedstock fraction is subjected to a first hydrothermal liquefaction, and wherein the second feedstock fraction is subjected to a second hydrothermal liquefaction.
9. The process according to any of clauses 5-8, wherein the sole based particulate fraction is separated into at least two different separated sole based particulate fraction.
10. The process according to any of clauses 5-9, wherein the upper based particulate fraction is separated into at least two different separated upper based particulate fraction.
11. The process according to any of clauses 1-10, wherein the method further comprising a particulate separation step comprising separating at least one particulated feedstock fraction into at least two different separated particulated feedstock fractions in the form of a first particulated feedstock fraction and a second particulated feedstock fraction, such as at least three different separated particulated feedstock fractions, such as at least four different separated particulated feedstock fractions.
12. The process according to any of clauses 5-11, wherein the first particulated feedstock fraction and the second particulated feedstock fraction are different.
13. The process according to any of clauses 5-12, wherein the first particulated feedstock fraction and the second particulated feedstock fraction have a composition similarity of no more than 70% by weight, such as no more than 50% by weight, such as no more than 30% by weight, such as no more than 20% by weight.
14. The process according to any of clauses 5-13, wherein the second particulated feedstock fraction has a content of natural material that is at least 20% by weight higher than for the first particulated feedstock fraction.
15. The process according to any of clauses 5-14, wherein the first particulated feedstock fraction has a content of polymeric material that is at least 20% by weight higher than for the second particulated feedstock fraction.
16. The process according to any of clauses 5-15, wherein the first particulated feedstock fraction has a content of synthetic polymeric material that is at least 20% by weight higher than for the second particulated feedstock fraction.
17. The process according to any of clauses 5-16, wherein the first particulated feedstock fraction has a content of polyurethane that is at least 20% by weight higher than for the second particulated feedstock fraction.
18. The process according to any of clauses 5-17, wherein the first particulated feedstock fraction has a content of polyurethane of at least 25% by weight, such as at least 50% by weight.
19. The process according to any of clauses 5-18, wherein the second particulated feedstock fraction has a content of polyurethane of no more than 10% by weight, such as no more than 5% by weight.
20. The process according to any of clauses 1-19, wherein the feedstock fraction further comprises a cofed feedstock.
21. The process according to any of clauses 1-20, wherein the method further comprises a feedstock mixing step for mixing footwear or a fraction derived therefrom and a cofed feedstock to obtain said feedstock fraction.
22. The process according to clause 20 or 21, wherein the cofed feedstock comprises a low-value or negative value feedstock.
23. The process according to any of clauses 20-22, wherein the cofed feedstock comprises a feedstock selected from the group of textile and textile based waste, industrial waste fractions, manure, and combinations thereof.
24. The process according to any of clauses 20-23, wherein the cofed feedstock comprises a biomass feedstock.
25. The process according to any of clauses 20-24, wherein the feedstock fraction comprises biomass feedstock in an amount of at least 2% by weight of the feedstock fraction, such as at least 5% by weight of the feedstock fraction, such as at least 10% by weight of the feedstock fraction, such as at least 20% by weight of the feedstock fraction, such as at least 30% by weight of the feedstock fraction, such as at least 40% by weight of the feedstock fraction.
26. The process according to clause 24 or 25, wherein the biomass feedstock comprises a cellulose based feedstock.
27. The process according to any of clauses 24-26, wherein the biomass feedstock comprises a lignocellulosic biomass.
28. The process according to any of clauses 24-27, wherein the biomass feedstock is selected from the group consisting of wood based biomass, wood pulp, straw, forestry residue, cork, bark, lignin, microalgae, macroalgae, seaweed, kelp, corn cobs, corn, waste fat, used cooking oils, corn stover, food waste, agricultural waste, rice husks, sugarcane bagasse, molasses, cotton, starch, cellulose, wheat, barley, mash, cotton stalks, grass, manure, yard waste, nut shells, coffee grounds, peels from fruit and vegetables, and any combination thereof.
29. The process according to any of clauses 23-28, wherein the industrial waste feedstock is selected from the group consisting of productions wastes from the leather and textile industries, sewage sludge, end-of-life products, matrasses, wood containing construction demolition materials/debris, municipal solid waste, residues from production processes, slaughterhouse waste, cheese whey, end-of-life furniture, paper, cardboard, end-of-life textile, surplus textile products from production of retail, waste food products from retail, furniture upholstery including vehicle seats, food processing waste, oil and lubricant waste, pharmaceutical waste, etc. and any combination thereof.
30. The process according to any of clauses 1-29, wherein the footwear product comprises at least a sole, such as at least a sole and an upper.
31. The process according to any of clauses 1-30, wherein the feedstock fraction comprises footwear products in an amount of at least 50% by weight of the feedstock fraction, such as at least 60% by weight of the feedstock fraction, such as at least 70% by weight of the feedstock fraction, such as at least 80% by weight of the feedstock fraction, such as at least 90% by weight of the feedstock fraction, such as at least 95% by weight of the feedstock fraction, or wherein the feedstock fraction consists of footwear products.
32. The process according to any of clauses 1-31, wherein the particulated feedstock fraction comprises a combination of two or more materials.
33. The process according to any of clauses 1-32, wherein the first particulated feedstock fraction comprises a combination of two or more materials.
34. The process according to any of clauses 1-33, wherein the second particulated feedstock fraction comprises a combination of two or more materials.
35. The process according to any of clauses 1-34, wherein the footwear product comprises two or more materials, such as three or more materials, such as four or more materials, such as five of more materials.
36. The process according to any of clauses 1-35, wherein the footwear products comprise at least one material selected from the group consisting of polyether, polyethylene, polypropylene, polyesters (e.g. polyethylene terephthalate), polyamides (e.g. nylon), polycarbonate, polyurethane, thermoplastic polyurethane, ethyl-vinyl acetate (EVA), polylactic acid, synthetic rubber, natural rubber, thermoplastic elastomers, acrylonitrile butadiene styrene polymer (ABS), polystyrene, polyvinyl chloride (PVC), polystyrene, composite materials, cotton, wool, cork, wood, wood fibers, bamboo, coconut, leather, nubuck, suede, synthetic leathers, leather alternatives, collagen, animal hair, textile, silk, metals and alloys, adhesives and hotmelt glues, contact glues, polyurethane glues, epoxy glues, EVA glues, and any combination thereof, such as at least two materials selected from said group, such as at least three materials selected from said group, such as at least four materials selected from said group, such as at least five materials selected from said group, such as at least six materials selected from said group.
37. The process according to any of clauses 1-36, wherein the footwear products comprise at least one material selected from the group consisting of leather, nubuck, suede, textile, natural rubber, synthetic rubber, thermoplastic polyurethane, thermoplastic elastomers, ethylene-vinyl acetate (EVA), polyurethane, and any combination thereof.
38. The process according to any of clauses 1-37, wherein the feedstock fraction comprises inorganic components, such as sand or dirt.
39. The process according to any of clauses 1-38, wherein the particulated feedstock fraction has a weight average particle size of no more than 10 millimeter, such as no more than 5 millimeter, such as no more than 2 millimeter, such as no more than 1 millimeter.
40. The process according to any of clauses 1-39, wherein the particulated feedstock fraction has a weight average shortest dimension of no more than 10 millimeter, such as no more than 5 millimeter, such as no more than 2 millimeter.
41. The process according to any of clauses 1-40, wherein the HTL based product comprises an oil product.
42. The process according to any of clauses 1-41, wherein the HTL based product comprises at least one recycled chemical.
43. The process according to any of clauses 1-42, wherein at least one recycled chemical comprises at least one monomer and/or precursor.
44. The process according to clause 43, wherein the at least one monomer and/or precursor comprises one or more polyurethane monomers and/or chemical precursors.
45. The process according to clause 43 or 44, wherein the at least one monomer or intermediates is selected from the group consisting of monomers or intermediates from polyamides, monomers or intermediates from polyesters, monomers or intermediates from polyurethanes, monomers from or intermediates ethylene-vinyl acetate, monomers or intermediates from rubbers, monomers or intermediates from thermoplastic polyurethane, monomers or intermediates from elastane, monomers from or intermediates carbonates, monomers from or intermediates thermoplastic polyurethane, monomers from or intermediates thermoplastic elastomers, monomers or intermediates from epoxides, and any combination thereof.
46. The process according to any of clauses 1-45, wherein the method further comprises separating at least one oil product fraction from an output fraction of the hydrothermal liquefaction.
47. The process according to any of clauses 1-46, wherein the method further comprises separating at least one recycled chemical, such as at least one monomer, from an output fraction of the hydrothermal liquefaction.
48. The process according to any of clauses 1-47, wherein the method further comprises separating at least one recycled chemical, such as a valuable chemical entity, such as a chemical selected from the group consisting of copper salts, cobalt salts, chromium salts, phosphorous components, from an output fraction of the hydrothermal liquefaction.
49. The process according to any of clauses 1-48, wherein the method further comprises a step of adding a water fraction to the feedstock fraction prior to the hydrothermal liquefaction.
50. The process according to any of clauses 1-49, wherein the step of adding water is subsequent to the particulation step.
51. The process according to any of clauses 1-50, wherein the step of adding water is prior to the particulation step.
52. The process according to any of clauses 1-51, wherein the method further comprises a removal step of inorganic components, such as sand, of the feedstock fraction prior to the step of hydrothermal liquefaction.
53. The process according to any of clauses 1-52, wherein the method further comprises a step of removing at least a part of contaminating and/or unprocessable components from the feedstock fraction.
54. The process according to any of clauses 1-53, wherein the step of hydrothermal liquefaction comprises subjecting the particulated feedstock fraction to a temperature of at least 170 degrees Celsius, such as at least 200 degrees Celsius, such as at least 250 degrees Celsius, such as at least 300 degrees Celsius.
55. The process according to any of clauses 1-54, wherein the step of hydrothermal liquefaction comprises subjecting the particulated feedstock fraction to a pressure of at least 50 bar, such as at least 75 bar, such as at least 100 bar, such as at least 125 bar.
56. The process according to any of clauses 1-55, wherein the step of hydrothermal liquefaction has a processing time of at least 5 minutes, such as at least 10 minutes, such as at least 20 minutes, such as at least 30 minutes.
57. The process according to any of clauses 1-56, wherein the method further comprises adding an additive, a reagent, a catalyst, or any combination thereof.
58. The process according to any of clauses 1-57, wherein the catalyst, the reagent, the additive or any combination therefore comprises a base.
59. The process according to any of clauses 1-58, wherein at least one or the temperature, the pressure and the processing time of the hydrothermal liquefaction is set at least partly based on the composition of the feedstock fraction.
60. A system for producing a HTL based product (HBP) comprising an oil product and/or recycled chemical(s), the system comprising
   an inlet for receiving a feedstock fraction (FF) comprising footwear products,
   a particulation arrangement connected to said inlet for receiving the feedstock fraction (FF), the particulation arrangement being configured to particulate at least a part of the feedstock fraction (FF) into at least one particulated feedstock fraction (PFF), and
   a hydrothermal liquefaction arrangement connected to the particulation arrangement for receiving the at least one particulated feedstock fraction (PFF), the hydrothermal liquefaction arrangement (HTL) being configured to process the particulated feedstock fraction (PFF) by hydrothermal liquefaction (HTL) to obtain said HTL based product.
61. The system according to clause 60, wherein the system is configured to operate in accordance with the method of any of clauses 1-59.

### FIGURES

The invention will now be described with reference to the figures, where
Figure 1 illustrates a process according to an embodiment of the invention,
Figure 2 illustrates a process according to an embodiment of the invention where the feedstock fraction is processed into a first particulated feedstock fraction and a second particulated feedstock fraction,
Figure 3 illustrates a process according to an embodiment of the invention where a further feedstock fraction is combined with the particulated feedstock fraction,
Figure 4 illustrates a process according to an embodiment of the invention where an aqueous fraction is added to the particulated feedstock fraction before hydrothermal liquefaction,
Figure 5 illustrates a process according to an embodiment of the invention where undesirable material is removed from the particulated fraction prior to hydrothermal liquefaction,
Figure 6 illustrates a hydrothermal liquefaction according to an embodiment of the invention where hydrothermal liquefaction is a continuous process, and
Figure 7 illustrates a hydrothermal liquefaction according to an embodiment of the invention where hydrothermal liquefaction is a batch process.

### DETAILED DESCRIPTION

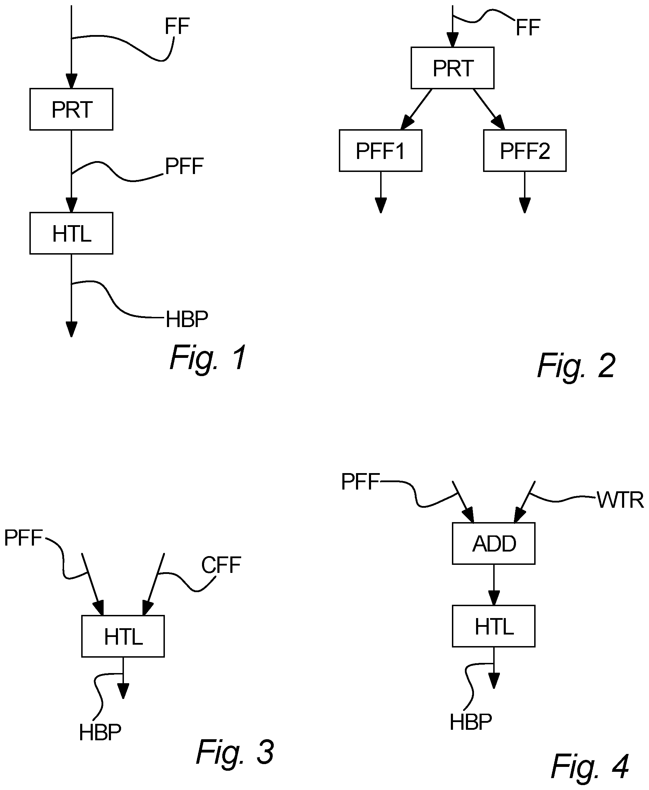

Referring to figure 1, a process for producing at least a HTL based product is illustrated according to an embodiment of the invention. As illustrates in figure 1, a feedstock fraction FF comprising footwear products provided.

Then, in a particulation step PRT, the feedstock fraction FF is processed into at least one particulated feedstock fraction PFF.

Subsequently, at least one particulated feedstock fraction is subjected to hydrothermal liquefaction HTL, whereby the HTL based product HBP is obtained. This HTL based product HBP comprises oil product and/or recycled chemical(s).

Now referring to figure 2, a particulation step according to an embodiment of the invention is illustrated.

Here, the feedstock fraction FF is processed in the particulation step PRT into a first particulated feedstock fraction PPF 1 and a second particulated feedstock fraction PFF2.

Subsequently, at least one of the first and the second particulated feedstock fractions PFF1, PFF2 is subjected to hydrothermal liquefaction HTL. This may advantageously be done in accordance with the embodiment illustrated in figure 1.

In certain embodiments, both particulated feedstock fractions are subjected to hydrothermal liquefaction separately, i.e. the first particulated feedstock fractions PFF1 is subjected to a first hydrothermal liquefaction HTL and the second particulated feedstock fractions PFF2 is subjected to as second hydrothermal liquefaction HTL.

In other embodiments, the only one of the two particulated feedstock fractions are subjected to hydrothermal liquefaction.

Similar to the embodiment illustrated in figure 2, the particulation step may include processing of the feedstock fraction FF into a further number of particulated feedstock fractions, such as three or four particulated feedstock fractions, or even more than four particulated feedstock fractions. These may similarly be subjected to separate hydrothermal liquefactions, either all of these fractions or only some of these.

It is further noted that in embodiments with two or more particulated feedstock fractions, two or more of these may subsequently be mixed, e.g. to obtain a certain desirable mixing ratio between components of the applied particulated feedstock fractions.

For example, if processing the feedstock fraction FF into three particulated feedstock fractions, the first particulated feedstock fraction may be subjected to a first hydrothermal liqufraction, whereas the second particulated feedstock fraction is mixed with e.g. 20% of the third particulated feedstock fraction to obtain a desirable mixing fraction of the components of the second and third particulated feedstock fractions. The obtained mixture may then be subjected to a separate hydrothermal liquefaction, whereas the remaining part of the third particulated feedstock fraction may e.g. be processed in a further separate hydrothermal liquefaction.

Now, turning to figure 3, a hydrothermal liquefaction step is illustrated according to an embodiment of the invention.

As shown in figure 3, the step of subjecting at least one of the particulated feedstock fractions PFF to hydrothermal liquefaction HTL further comprises adding a cofed feedstock fraction CFF to the hydrothermal liquefaction HTL together with the particulated feedstock fraction.

As described herein, the cofed feedstock fraction may be composed of a wide range of different materials and mixtures, including but not limited to biomass, industrial waste, sewage sludge, manure, etc. and mixtures thereof.

Advantageously, this embodiment may be combined with the embodiment illustrated in figure 1 and/or any other embodiments described as combinable with the embodiment of figure 1.

In particular, it is noted that the embodiment of figure 3 may be combined with the embodiment of figure 2, i.e. processing the feedstock fractions into at least two separate particulated feedstock fractions and adding one or more cofed feedstocks to one or more of the particulated feedstock fractions.

As an illustrative examples, the feedstock fraction may be processed into at least two separate particulated feedstock fractions, where the cofed feedstock fraction then subsequently is added to one of these particulated feedstock fraction.

The cofed feedstock fraction may in some embodiments be added prior to the particulation step.

Now referring to figure 4, an embodiment of the invention is illustrated.

A water fraction WTR is added to the particulated feedstock fraction PFF in an addition step ADD, which may comprise active mixing or rely on the water fraction and the particulated feedstock fraction passively interdispersing to a sufficient degree.

Advantageously, this embodiment may be combined with the embodiment illustrated in figure 1 and/or any other embodiments described as combinable with the embodiment of figure 1.

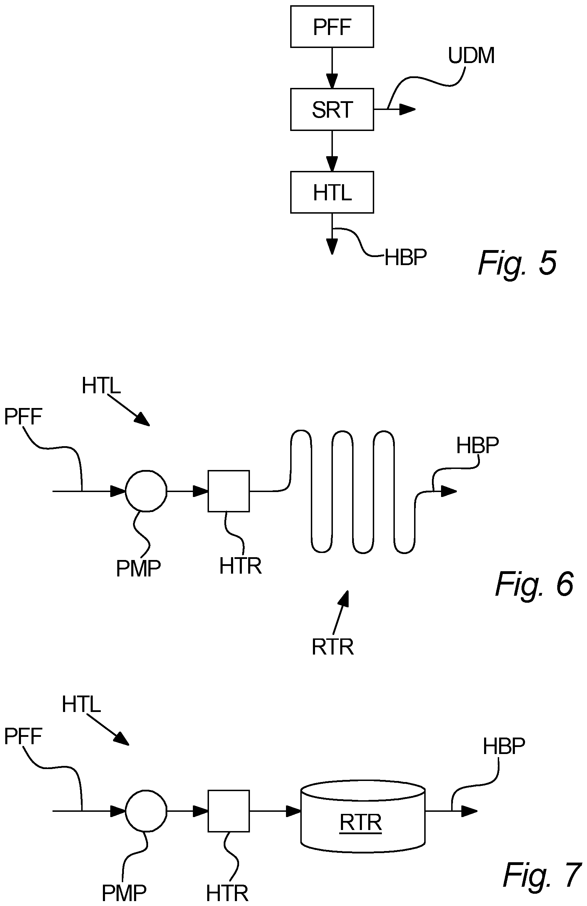

Referring now to figure 5, a further embodiment of the invention is illustrated.

In this embodiment, the particulated feedstock fraction PFF, is processed to remove undesirable elements. These may fall into two groups, the first of which includes contaminants that may pollute the or otherwise negatively impact e.g. the obtained HTL based product HBP or lead to corrosion of the processing equipment. The second group include unprocessable components, such as metallic object and polyolefins. It is noted that some compounds may fall into both groups.

Advantageously, this embodiment may be combined with the embodiment illustrated in figure 1 and/or any other embodiments described as combinable with the embodiment of figure 1.

Now, figures 6 and 7 illustrates different modes of hydrothermal liquefaction according to two different embodiments, both of which may be combined with the embodiment illustrated in figure 1 and/or any other embodiments described as combinable with the embodiment of figure 1. In particular, figure 6 illustrates a continuous hydrothermal liquefaction, whereas figure 7 illustrates a batch mode hydrothermal liquefaction.

In the embodiment of figure 6, the particulated feedstock fraction PFF is first fed to a pressurization device PMP, e.g. a high pressure pump which pressurizes the particulated feedstock fraction PFF to the desired pressure level. It is noted that in some embodiments, the pressurization device PMP may be a single pump, whereas it in other embodiments may include two or more pumps e.g. operating to sequentially increase the pressure to the desired level.

Next, pressurized particulated feedstock fraction PFF is fed to a heating device HTR, which is arranged to heat the particulated feedstock fraction PFF to the desired temperature for hydrothermal liquefaction. It is noted that the heating device HTR may be a single heater or a combination of several heaters. It may also include heating based e.g. heat pumps, electrical heating, gas heating, heating based on combustion of hydrocarbons etc. It is further noted that while figure 5 shows the heating device HTR subsequent to the pressurizing device PMP, however the order of these may in some embodiments be opposite. Also, when e.g. several heaters are used, these may be both before and after the pressurizing device PMP.

Then, the particulated feedstock fraction PFF is fed through a reactor RTR, which may e.g. be composed of a pipe having a suitable length for the hydrothermal liquefaction. For a given cross-sectional area, increasing the length of the pipe forming the reactor RTR leads to a longer residence time for a given feeding rate, and vice versa. Finally, the HTL based product HBP may be obtained.

It is noted that when the referring to the heating device HTR, this may comprise one or more distributed sub-units, e.g. for gradual heating and/or preserving a high temperature of the particulated feedstock fraction PFF.

In some embodiments, the heating device HTR and the reactor RTR are partly integrated, e.g. by using a subunit of the heating device HTR to heat the particulated feedstock fraction prior to the reactor RTR and then integrating further subunits of the heating device HTR with the reactor RTR.

In some embodiments, the heating device HTR and the reactor RTR are integrated, e.g. by using integrating subunits of the heating device HTR with the reactor RTR for heating of the particulated feedstock fraction inside the reactor RTR.

In the embodiment of figure 7, the particulated feedstock PFF may similarly be fed to a pressurization device PMP, and then to a heating device HTR. Similar to the embodiment of figure 6, the pressurization device PMP and the heating device HTR, whereas the reactor RTR is a batch reactor, where the particulated feedstock fraction PFF is processed during retention time. Finally, the HTL based product HBP may be obtained.

It is further noted that while figure 7 shows the heating device HTR subsequent to the pressurizing device PMP, however the order of these may in some embodiments be opposite. Also, when e.g. several heaters are used, these may be both before and after the pressurizing device PMP.

Features not shown in figure 6 or 7, but which may be included in various embodiments, are a device for reducing the pressure to ambient pressure and arrangements for separating the HTL based product HBP from the output stream of the reactor.

## Claims

1. A process for producing at least a HTL based product (HBP) comprising an oil product and/or recycled chemical(s), the process comprising the steps of
providing a feedstock fraction (FF) comprising footwear products,
in a particulation step processing at least a part of the feedstock fraction (FF) into at least one particulated feedstock fraction (PFF),
subjecting at least one particulated feedstock fraction (PFF) to hydrothermal liquefaction (HTL) to obtain the HTL based product (HBP).

2. The process according to claim 1, wherein the particulation step comprises processing at least a part of the feedstock fraction into at least a first particulated feedstock fraction and a second particulated feedstock fraction, wherein at least one of the first feedstock fraction and the second feedstock fraction is subjected to hydrothermal liquefaction.

3. The process according to claim 2, wherein the first feedstock fraction is subjected to a first hydrothermal liquefaction, and wherein the second feedstock fraction is subjected to a second hydrothermal liquefaction.

4. The process according to claim 2 or 3, wherein the at least two particulated feedstock fractions have a different composition.

5. The process according to any of claims 1-4, wherein the particulation step further comprises cutting the footwear into at least one sole based part and at least one upper part prior to processing.

6. The process according to claim 5, wherein, in the particulation step, the sole based part is processed into at least a first particulated feedstock fraction being a sole based particulate fraction and the upper based part is processed into a second particulated feedstock fraction being an upper based particulate fraction.

7. The process according to claim 6, wherein the first feedstock fraction is subjected to a first hydrothermal liquefaction, and wherein the second feedstock fraction is subjected to a second hydrothermal liquefaction.

8. The process according to any of claims 5-7, wherein the first particulated feedstock fraction and the second particulated feedstock fraction are different.

9. The process according to any of claims 5-8, wherein the first particulated feedstock fraction has a content of polymeric material that is at least 20% by weight higher than for the second particulated feedstock fraction.

10. The process according to any of claims 1-9, wherein the feedstock fraction further comprises a cofed feedstock.

11. The process according to claim 10, wherein the cofed feedstock comprises a feedstock selected from the group of textile and textile based waste, industrial waste fractions, manure, and combinations thereof.

12. The process according to any of claims 1-11, wherein the particulated feedstock fraction comprises a combination of two or more materials.

13. The process according to any of claims 1-12, wherein the HTL based product comprises an oil product and/or at least one recycled chemical.

14. The process according to any of claims 1-13, wherein the method further comprises a step of adding a water fraction to the feedstock fraction prior to the hydrothermal liquefaction.

15. A system for producing a HTL based product (HBP) comprising an oil product and/or recycled chemical(s), the system comprising
an inlet for receiving a feedstock fraction (FF) comprising footwear products,
a particulation arrangement connected to said inlet for receiving the feedstock fraction (FF), the particulation arrangement being configured to particulate at least a part of the feedstock fraction (FF) into at least one particulated feedstock fraction (PFF), and
a hydrothermal liquefaction arrangement connected to the particulation arrangement for receiving the at least one particulated feedstock fraction (PFF), the hydrothermal liquefaction arrangement (HTL) being configured to process the particulated feedstock fraction (PFF) by hydrothermal liquefaction (HTL) to obtain said HTL based product.
